# EUROPEAN PATENT APPLICATION

(11) **EP 4 245 179 A1**
(43) Date of publication of application: **20.09.2023**
(21) Application number: 21891265.7
(22) Date of filing: 15.11.2021
(51) Int. Cl.: A24F 47/00, A24F 40/40, A24D 1/20

(54) **SILICA GEL COOLING SECTION FOR HEAT-NOT-BURN PRODUCT**

(30) Priority: 16.11.2020 CN 202011282393
(71) Applicant: Yunnan Tobacco Biological Technology Co., Ltd., Yunnan 650220 (CN)
(72) Inventor: YANG, Zigang, Kunming, Yunnan 650220 (CN); HUANG, Liang, Kunming, Yunnan 650220 (CN); ZHOU, Jin, Kunming, Yunnan 650220 (CN); SHI, Qingzhen, Kunming, Yunnan 650220 (CN)
(74) Representative: Zaboliene, Reda
(86) International application number: PCT/CN2021/130761
(87) International publication number: WO 2022/100745

(57) **Abstract**

A silica gel cooling section for a heat-not-burn product. The silica gel cooling section is a tubular cooling section composed of a straight-through hole smoke channel having different cross sectional shapes and a channel wall surrounding the smoke channel , and can be directly rolled into a cigarette in a binary or greater than binary structure with a smoking section or the like. The silica gel cooling section has the characteristics of a high ventilation rate, high specific heat capacity and good heat resistance, and the smoke temperature is reduced by means of double cooling the evaporation heat absorption of bound water in silica gel and the specific heat capacity of the silica gel; moreover, since there is no heat collapse and melting during smoking, the smoke concentration is increased while the smoke temperature is reduced, an attached fragrance substance is rich in smoke, and the consumption experience of a consumer is satisfied.

## Description

### TECHNICAL FIELD

The present invention belongs to the technical field of tobacco processing. More specifically, the present invention relates to a silica gel cooling section for a heat-not-burn product.

### BACKGROUND

It is well known that smoking is harmful to health. Especially with the development of society and the continuous improvement of people's living standards, people are increasingly concerned with their own physical health problems, and how to safely smoke cigarettes for smokers is a key direction for tobacco technology development. The heat-not-burn cigarette is a cigarette that heats a tobacco substance at 300-500°C by means of an electronic device rather than burning a tobacco substance. Since open fire and cigarette ash are not produced during smoking, it is environmentally friendly, enables a consumer to feel the fragrance of the tobacco when smoking the cigarette by means of the electronic heating device, reduces harmful substances generated by high-temperature pyrolysis in the combustion of the conventional cigarette, provides an effective way for the healthy smoking of the consumer. The smoking mode is more and more popular at home and abroad, and a considerable scale of consumer group has been formed.

When using the heat-not-burn product, the smoking set is heated and the cigarette structure is short, heat is sharply generated in the smoking process, and the smoking experience is affected. For example, US 20140305448 A1 disclosed a heat-not-burn cartridge having quaternary composite structure, among which there is a cooling section rolled by gathering and polymerizing the polylactic acid films. In the smoking process, through the phase change principle of polylactic acid, the temperature of part of the smoke is absorbed to reduce the temperature of the smoke inhaled, thereby improving the smoking experience. However, in addition to physical changes, there are also chemical changes in the phase change process. After the polylactic acid is melted at high temperature, the polylactic acid films shrink and melt, which will block the smoke channel and affect the taste of smoking.

Therefore, with regard to technical defects in the prior art, the present inventors have conducted a large number of tests and analysis on a silica gel cooling section in a heat-not-burn cigarette, so as to complete the present invention.

### SUMMARY OF THE INVENTION

An object of the present invention is to provide a silica gel cooling section for a heat-not-burn product.

The present invention is achieved by the following technical solutions.

The present invention relates to a silica gel cooling section for a heat-not-burn product.

The silica gel cooling section of a heat-not-burn product is a tubular cooling section composed of a straight-through-hole smoke channel having different cross sectional shapes such as circular, triangle, pentagon, quincunx or other irregular shapes and a channel wall surrounding the smoke channel; and the water content of the silica gel in the silica gel cooling section is 1.0-3.0% by weight.

According to a preferred embodiment of the present invention, the silica gel cooling section is prepared by using an existing high-temperature curing molding method to prepare a prefabricated silica gel cooling section from silica gel, the prefabricated silica gel cooling section is maintained at a temperature of 18-22°C and a relative humidity of 68-72% for more than 24 hours, and the silica gel cooling section is obtained when the water content thereof reaches 1.0-3.0% by weight.

According to another preferred embodiment of the present invention, the high-temperature curing molding method is extrusion molding, film pressing molding, injection molding or glue dripping molding.

According to another preferred embodiment of the present invention, the silica gel of the silica gel cooling section is methyl silicone rubber, methyl vinyl silicone rubber, methyl vinyl phenyl silicone rubber, nitrile silicone rubber or fluorosilicone rubber food-grade silicone rubber material.

According to another preferred embodiment of the present invention, the silica gel of the silica gel cooling section has a specific heat capacity of 1.9-3.1 kJ/(kg·°C).

According to another preferred embodiment of the present invention, the thermal decomposition temperature of the silica gel of the silica gel cooling section is 300°C or more.

According to another preferred embodiment of the present invention, the ratio of the cross-sectional area of the smoke channel of the silica gel cooling section to that of the non-channel is 0.3-2.0.

According to another preferred embodiment of the present invention, the silica gel cooling section has a length of 5-50 mm, an outer diameter of 4.0-8.0 mm, and a Shore hardness of 20-80 degrees.

According to another preferred embodiment of the present invention, the silica gel of the silica gel cooling section contains flower, mint, fruit or tobacco flavor.

According to another preferred embodiment of the present invention, the silica gel cooling section and the smoking section are rolled into a cigarette in a binary structure, or the silica gel cooling section and a plurality of structural units of the heat-not-burn product are rolled into a cigarette in a greater than binary structure, with a wrapping material.

The present invention will be described in more detail below.

The present invention relates to a silica gel cooling section for a heat-not-burn product.

The silica gel cooling section is a tubular cooling section composed of a straight-through-hole smoke channel having different cross sectional shapes such as circular, triangle, pentagon, quincunx or other irregular shapes and a channel wall surrounding the smoke channel

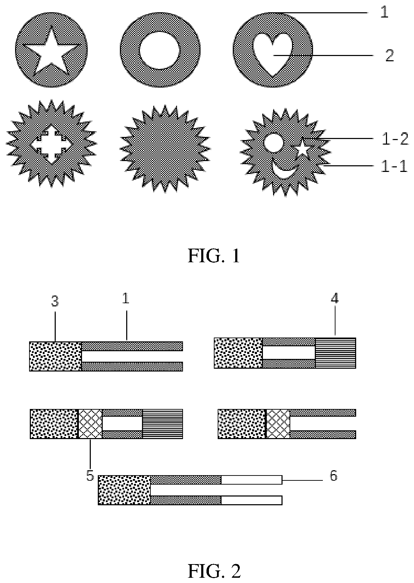

In the present invention, the straight-through-hole smoke channel of the silica gel cooling section may be three modes: the first mode is that the straight-through-hole smoke channel is located in the middle of the silica gel cooling section; the second mode is that the straight-through-hole smoke channel is close to the outer wall of the silica gel cooling section; and the third mode is the combination of the first mode and the second mode, see FIG. 1.

According to a preferred embodiment of the present invention, the silica gel cooling section is prepared by using an existing high-temperature curing molding method to prepare a prefabricated silica gel cooling section from silica gel, the prefabricated silica gel cooling section is maintained at a temperature of 18-22°C and a relative humidity of 68-72% for more than 24 hours, and the silica gel cooling section is obtained when the water content thereof reaches 1.0-3.0% by weight.

The inside of the silica gel is a nanoscale microporous structure, a large number of hydroxyl groups are present on the surface of the micropores, and the hydroxyl groups have affinity to water molecules, so that water can be absorbed to form binding water, and the binding water is not easy to evaporate at normal temperature. The prefabricated silica gel cooling section is easy to absorb water in the environment under high humidity. After multiple tests, the prefabricated silica gel cooling section can stably reach the water content under the above conditions.

When an existing high-temperature curing molding method is used to prepare a prefabricated silica gel cooling section from silica gel, the silica gel needs to be cured at a high temperature for 2-6 hours to achieve a desired hardness and form. After being cured, the water content of silica gel is extremely low or substantially free of water, so that hydration treatment needs to be performed on the high-temperature cured molded silica gel to make the water content of the silica gel reach 1.0-3.0% by weight.

The temperature of the smoke discharged is very high when the heat-not-burn product is used. When contacting with the silica gel, the smoke heats the silica gel and evaporates moisture in the silica gel. The process of moisture evaporation requires a lot of heat, so that the temperature of part of the smoke is reduced.

The water content of the silica gel of the silica gel cooling section is 1.0-3.0% by weight. If the water content is lower than 1%, the water content is too low to achieve obvious cooling effect. If the water content is higher than 3%, excess water will diffuse to the smoking section or other structural units, which is easy to cause mildew of the cigarette and affect the product quality. The water content of silica gel is preferably 2.0-3.0%. The water content of the invention is tested according to the test method specified in GB/T 23357-2009 "Tobacco and tobacco products - Determination of water content - Karl Fisher method".

In the present invention, the high-temperature curing molding method is extrusion molding, film pressing molding, injection molding or glue dripping molding. Among them, the extrusion molding is a continuous molding process that use an existing commercially available extruder to extrude and mold the silica gel. See CN 102642291 B, which is titled "a preparation process for a large-diameter silicone tube". Film pressing molding is to put silica gel raw materials and corresponding auxiliary materials into the high-temperature mold, and then apply pressure through the flat vulcanizing machine table to mold through high-temperature vulcanization. See CN 101973128B, which is titled "a production process of a roll-type silicone rubber film". Injection molding is performed by means of a silica gel ejection machine to press a silica gel component to a charging barrel of an output machine, and then press the silica gel component into a hot mold cavity for molding by means of a nozzle. For details, see CN 107639787A, which is titled "a process method for forming a silica gel layer on the surface of a glass bottle by means of injection molding". Glue dripping molding is such a method that the silica gel liquid raw material is loaded into the needle cylinder and dripped onto the mold by pneumatic, and then heated to be vulcanized and molded. For details, see Zhang, et al. "liquid silica gel molding technology and its application", China Rubber/Plastics Technology and Equipment, 2012, 38 (18): 35-38.

The silica gel used in the invention is methyl silicone rubber, methyl vinyl silicone rubber, methyl vinyl phenyl silicone rubber, nitrile silicone rubber or fluorosilicone rubber food-grade silicone rubber which are sold on the market at present, such as methyl silicone rubber sold by Shenzhen Muwei Technology Co., Ltd. under the trade name of dimethyl silicone rubber, methyl vinyl silicone rubber sold by Shenzhen Muwei Technology Co., Ltd. under the trade name of vinyl silicone rubber, methyl vinyl phenyl silicone rubber sold by Anhui Aiyueta Silicon Oil Co., Ltd. under the trade name of low phenyl silicone rubber, nitrile silicone rubber sold by Hubei Xinhai Nano Silicon Industry Co. Ltd. under the trade name of butyronitrile silicone rubber, fluorosilicone rubber sold by Dongguan Huadai Organic Silicon Co., Ltd. under the trade name of γ-trifluoropropyl methyl polysiloxane.

In the present invention, the thermal decomposition temperature of the silica gel of the cooling section is above 300°C. When the smoking set heats the smoking part, the local temperature can be increased. The temperature of the smoke is 200°C or above in the smoking process of the heat-not-burn cigarette. The long-time accumulating of smoke will result in a higher temperature, so that the cooling material should have certain heat resistance. The temperature was determined according to GB/T 19466.4-2016 "Plastics - Differential scanning calorimetry (DSC) - Part 3: Determination of temperature and enthalpy of melting and crystallization ". If the thermal decomposition temperature of the silica gel of the cooling section is lower than 300°C, the silica gel will generate heat collapse or melt during smoking, which will affect the smooth of smoking, and more seriously, it will lose the cooling effect and affect the smoking experience.

According to the invention, the silica gel has a specific heat capacity of 1.9-3.1 kJ/(kg·°C). The specific heat capacity is a common-used physical quantity in thermodynamics, which should be understood as the amount of heat absorbed or released by a unit mass substance when raising or lowering the unit temperature. The specific heat capacity of the silica gel of the present invention is 1.9-3.1 kJ/(kg·°C). The specific heat capacity is determined according to GB/T 19466.4-2016 "Plastic - Differential scanning calorimetry (DSC) - Part 4: Determination of specific heat capacity".

If the specific heat capacity of the silica gel is lower than 1.9 kJ/(kg·°C), the cooling section of unit weight absorbs less heat, causing the temperature of the smoke not to be reduced significantly, so that the smoke is hot. If the specific heat capacity of the silica gel is higher than 3.1 kJ/(kg·°C), the cooling section of unit weight absorbs more heat, so that the moisture condensation phenomenon in the smoke is obvious, and the water content of the smoke also decreases obviously, thereby causing the smoke to become dry. Thus, the silica gel has a specific heat capacity of 1.9-3.1 kJ/(kg·°C), preferably 2.2-2.8 kJ/(kg·°C).

In the present invention, the smoke temperature is reduced by the dual effects of the evaporation and heat absorption of the silica gel bound water and the specific heat capacity of the silica gel.

According to the present invention, the ratio of the cross-sectional area of the smoke channel of the silica gel cooling section to the cross-sectional area of the non-channel is 0.3-2.0. In the present invention, the cross-sectional area of the smoke channel should be understood as the sum of the cross-sectional areas of all the smoke channels on any cross section of the entire silica gel cooling section, and the cross-sectional area of the non-smoke channel should be understood as the sum of the cross-sectional areas of all the non-smoke channels on any cross section of the entire silica gel cooling section. If the ratio of the cross-sectional area of the smoke channel to that of the non-channel is less than 0.3, the smoke channel will be small, the suction resistance will increase in smoking process, and the concentration of the smoke will be insufficient. If the ratio of the cross-sectional area of the smoke channel to that of the non-channel is greater than 2.0, the smoke channel will be too large, and the heat capacity of the silica gel cooling section will be insufficient, so that the temperature of the smoke and the temperature of the lip end of the cigarette cartridge are too high, thereby affecting the smoking experience.

According to the present invention, the silica gel cooling section has a length of 5-50 mm, an outer diameter of 4.0-8.0 mm, and a Shore hardness of 20-80 degrees. If the length of the silica gel cooling section is longer than 50 mm, the smoke path will be too long, reducing the smoke mist amount per suction. If the length of the silica gel cooling section is shorter than 5 mm, the smoke path will too short, the smoke cooling will be insufficient and its temperature will be too high, thereby affecting the smoking experience.

The outer diameter of the silica gel cooling section is 4.0-8.0 mm, which is the outer diameter commonly used by existing commercially available cigarettes.

Shore hardness is a standard representing the hardness of rubber, which is detected according to GB/T 2411-2008 "Plastics and ebonite - Determination of indentation hardness by means of a durometer (shore hardness)". The silica gel cooling section has a Shore hardness of 20-80 degrees. If the Shore hardness of the silica gel cooling section is less than 20 degrees, it is poor in molding, resulting in poor appearance, which is not conducive to cigarette molding. If the Shore hardness of the silica gel cooling section is greater than 80 degrees, the silica gel cooling section will not be easily cut off in the cigarette forming process, and the incision will not be neat. Preferably, the silica gel cooling section has a Shore hardness of 30-70 degrees, more preferably 38-62 degrees.

According to the present invention, the silica gel of the silica gel cooling section contains flower, mint, fruit or tobacco flavor. These flavors are added to the silica gel according to 0.1-50.0% by weight of the silica gel when the rubber is mixed. When the smoke passes through the silica gel cooling section, the aroma substances contained in the silica gel are eluted by the heat of the smoke, so that the fragrance of the smoke is increased, for example, the flower fragrance such as the rose, the gardenia or the osmanthus, the mint flavor such as the menthol, the peppermint or the Asian mint, and the fruit aromas such as the pawpaw, the passion fruit or the kiwi and the like.

The flower fragrance essence, the mint essence, the fruity essence and the tobacco essence used in the present invention are products sold on the market at present. For example, the rose fragrance essence sold by Yunnan Bagu Biotechnology Co. Ltd. under the trade name of Ku-shui rose, the Asian mint essence sold by Yunnan Bagu Biotechnology Co. Ltd. under the trade name of Touxinliang, the passion fruit aroma essence sold by Yunnan Bagu Biotechnology Co. Ltd. under the trade name of passion fruit, and the burley tobacco essence sold by the Yunnan Henggang Technology Co. Ltd. under the trade name of mixed tobacco flavor.

In the present invention, the silica gel cooling section and the smoking section are rolled into a cigarette in a binary structure with a wrapping material, or the silica gel cooling section and a plurality of structural units of the heat-not-burn product are rolled into a cigarette in a greater than binary structural with a wrapping material. For example, the cigarette in a binary structure is the cigarette composed of a smoking section and a silica gel cooling section, and the cigarette in a greater than binary structural is the cigarette composed of a smoking section, a filtering section, a supporting section and a silica gel cooling section. The smoking section is, for example, a sheet-type smoking section. The filtering section is, for example, an acetate fiber filter rod; the supporting section is, for example, a hollow paper tube. See FIG. 2 for a specific structural situation.

The measurement methods for the smoke concentration and smoke temperature and sense evaluation method are described below.

According to GB/T 19609-2004 "Cigarette - Determination of total and nicotine-free dry particulate matter using a routine analytical smoking machine" and GB/T 16447-2004 "Tobacco and tobacco products - atmosphere for conditioning and testing", a MYUZ smoking set produced by Dongguan Juwei Electronics Co. Ltd. is used, and a smoke concentration detector produced by Dongguan Feihong Instrument Equipment Co. Ltd. is used to detect the smoke concentration, and a K-type thermocouple temperature detector is used to determine the smoke temperature of the cartridge. According to GB 5606.4-2005 "Cigarette - Part 4: Technical requirements for sense evaluation," sense evaluation is performed on the fragrance part of the cigarette. At the same time, the heat-not-burn HEETs original flavor cartridge produced by the Philip Morris International is also correspondingly detected and evaluated as control 1.

The silica gel cooling section for the heat-not-burn product of the present invention has the following characteristics.
1. The silica gel cooling section of the present invention has a relatively high specific heat capacity. It exchanges heat with hot smoke in the smoking process. While absorbing the heat of the smoke, the temperature of the smoke is reduced, so that the temperature of the entire silica gel section change little, ensuring the reduction of the temperature of the mainstream smoke and the lip end, which makes the smoking more comfortable.
2. The moisture in the silica gel cooling section of the present invention can evaporate and absorb heat when encountering the smoke higher than 150°C during the smoking process, thereby reducing the temperature of a part of the smoke.
3. The silica gel cooling section of the present invention has good heat resistance, does not collapse during the smoking process, thus ensuring the smooth flow of the smoke.
4. In the processing process, the step of loading fragrance is added, so as to enrich the fragrance during smoking and improve the comfort of smoking.

The beneficial effects of the present invention are as follows:
The silica gel cooling section of the present invention has physical properties of a high ventilation rate, high specific heat capacity and good heat resistance. The smoke temperature is reduced by means of double cooling, the heat absorption by evaporation of bound water in silica gel and the specific heat capacity of the silica gel. Moreover, since there is no heat collapse and melting during smoking, the smoke concentration is increased while the smoke temperature is reduced. The attached fragrance substance enriches the tobacco flavor and satisfy the consumers' consumption experience.

### BRIEF DESCRIPTION OF THE DRAWINGS

FIG. 1 is a cross-sectional diagram of the silica gel section for a heat-not-burn product of the present invention.
FIG. 2 is a schematic diagram of the position of the silica gel section for the heat-not-burn product of the present invention in the cartridge.

In the drawings:
1: silica gel section; 1-1: outer groove; 1-2: inner groove; 2: smoke channel; 3: smoking section; 4: filtering section; 5: supporting section; 6: empty tube section.

### DETAILED DESCRIPTION OF THE EMBODIMENTS

The present invention will be better understood from the following examples.

### Example 1: A silica gel cooling section for the heat-not-burn product of the present invention

The implementation of this embodiment is as follows:
The silica gel cooling section is a tubular cooling section composed of a straight-through-hole smoke channel having a circular cross-section and a channel wall surrounding the smoke channel; the straight-through-hole smoke channels are located in the middle of the silica gel cooling section; the ratio of the cross-sectional area of the smoke channels to that of the non-channel is 0.8.

A methyl silicone rubber food-grade silica gel, sold by Shenzhen Muwei Technology Co., Ltd. under the trade name of dimethyl silicone rubber, having a thermal decomposition temperature above 300°C, is used to prepare a prefabricated silica gel cooling section by using the extrusion high-temperature curing molding method described in the present specification, and then maintaining for 24.5 hours at a temperature of 22°C and a relative humidity of 68%. Using the detection method described in this specification to detect the water content thereof reaches 1.5% by weight to obtain the silica gel cooling section. The length of the silica gel cooling section is 50 mm, and its outer diameter is 5.6 mm. Detected according to the methods described in the present specification, its Shore hardness is 20 degrees, and the specific heat capacity is 2.1 kJ/(kg·°C). It contains rose fragrance essence sold by Yunnan Bagu Biotechnology Co. Ltd. under the trade name of Ku-shui rose.

The silica gel cooling section and the sheet-type smoking section are rolled into a cigarette in a binary structure with an existing forming paper wrapping material.

According to the method described in the description of the present application, the smoke temperature, the smoke concentration and the sense evaluation are detected, and the detection results and the smoking evaluation result are listed in Table 1.

At the same time, the heat-not-burn HEETs original flavor cartridge produced by the Philip Morris International is also correspondingly detected and evaluated as control 1, and the detection result and the smoking evaluation result are also listed in Table 1.

### Example 2: A silica gel cooling section for the heat-not-burn product of the present invention

The silica gel cooling section is a tubular cooling section composed of a straight-through-hole smoke channel having a pentagonal cross-section and a channel wall surrounding the smoke channel. The straight-through-hole smoke channels are located in the middle of the silica gel cooling section. The ratio of the cross-sectional area of the smoke channels to that of the non-channel is 1.2.

A methyl vinyl silicone rubber food-grade silica gel, sold by Shenzhen Muwei Technology Co., Ltd. under the trade name of vinyl silicone rubber, having a thermal decomposition temperature above 300°C, is used to prepare a prefabricated silica gel cooling section by using the film pressing high-temperature curing molding method described in the present specification, and then maintaining for 24.8 hours at a temperature of 18°C and a relative humidity of 70%. Using the detection method described in this specification to detect the water content thereof reaches 1.8% by weight to obtain the silica gel cooling section. The length of the silica gel cooling section is 30 mm, and its outer diameter is 6.5 mm. Detected according to the methods described in the present specification, its Shore hardness is 60 degrees, and the specific heat capacity is 2.8 kJ/(kg·°C). It contains the Asian mint essence sold by Yunnan Bagu Biotechnology Co. Ltd. under the trade name of Touxinliang.

The silica gel cooling section and the sheet-type smoking section are rolled into a cigarette in a binary structure with an existing forming paper wrapping material.

### Example 3: A silica gel cooling section for the heat-not-burn product of the present invention

The silica gel cooling section is a tubular cooling section composed of a straight-through-hole smoke channel having a quincunx cross-section and a channel wall surrounding the smoke channel. The straight-through-hole smoke channels are close to the outer wall of the silica gel cooling section. The ratio of the cross-sectional area of the smoke channels to that of the non-channel is 1.6.

A methyl vinyl phenyl silicone food-grade rubber sold by Anhui Aiyueta Silicon Oil Co., Ltd. under the trade name of low phenyl silicone rubber, having a thermal decomposition temperature above 300°C, is used to prepare a prefabricated silica gel cooling section by using the injection high-temperature curing molding method described in the present specification, and then maintaining for 25.2 hours at a temperature of 20°C and a relative humidity of 72%. Using the detection method described in this specification to detect the water content thereof reaches 2.5% by weight to obtain the silica gel cooling section. The length of the silica gel cooling section is 18 mm, and its outer diameter is 7.0 mm. Detected by methods described in the present specification, its Shore hardness is 50 degrees, and the specific heat capacity is 2.5 kJ/(kg·°C). It contains passion fruit aroma essence sold by Yunnan Bagu Biotechnology Co. Ltd. under the trade name of passion fruit.

The silica gel cooling section and the sheet-type smoking section are rolled into a cigarette in a binary structure with an existing forming paper wrapping material.

### Example 4: A silica gel cooling section for the heat-not-burn product of the present invention

The silica gel cooling section is a tubular cooling section composed of straight-through-hole smoke channels having the pentagonal cross-section and channel walls surrounding the smoke channels. There are 20 total straight-through-hole smoke channels, wherein 10 are located in the middle of the silica gel cooling section, and 10 are close to the outer wall of the silica gel cooling section. The ratio of the cross-sectional area of the smoke channels to that of the non-channel is 1.9.

A nitrile silicone rubber food-grade silica gel sold by Hubei Xinhai Nano Silicon Industry Co. Ltd. under the trade name of butyronitrile silicone rubber, having a thermal decomposition temperature above 300°C, is used to prepare a prefabricated silica gel cooling section by using the glue dripping high-temperature curing molding method described in this specification, and then maintaining for 24.8 hours at a temperature of 18°C and a relative humidity of 70%. Using the detection method described in this specification to detect the water content thereof reaches 3.0% by weight to obtain the silica gel cooling section. The length of the silica gel cooling section is 25 mm, and its outer diameter is 8.0 mm. Detected by methods described in the present specification, its Shore hardness is 30 degrees, and the specific heat capacity is 2.3 kJ/(kg·°C). It contains burley tobacco essence sold by Yunnan Henggang Technology Co. Ltd. under the trade name of mixed tobacco flavor.

The silica gel cooling section and the existing sheet-type smoking section and the acetate fiber filtering section are rolled into a cigarette in a ternary structure with a forming paper wrapping material.

### Example 5: A silica gel cooling section for the heat-not-burn product of the present invention

The silica gel cooling section is a tubular cooling section composed of straight-through-hole smoke channels having other irregular shaped cross-section (see the lower right-side diagram in FIG. 1) and channel walls surrounding the smoke channels. The straight-through-hole smoke channels are located in the middle of the silica gel cooling section. The ratio of the cross-sectional area of the smoke channels to that of the non-channel is 1.8.

The fluorosilicone rubber food-grade silica gel sold by Dongguan Huadai Organic Silicon Co., Ltd. under the trade name of γ-trifluoropropyl methyl polysiloxane, having a thermal decomposition temperature above 300°C, is used to prepare a prefabricated silica gel cooling section by using the injection high-temperature curing molding method described in the present specification, and then maintaining for 24.2 hours at a temperature of 20°C and a relative humidity of 68%. Using the detection method described in this specification to detect, the water content thereof reaches 2.2% by weight to obtain the silica gel cooling section. The length of the silica gel cooling section is 40 mm, its outer diameter is 5.0 mm. Detecting according to the methods described in the present specification, the Shore hardness of the silica gel cooling section is 80 degrees, and its specific heat capacity is 3.1 kJ/(kg·°C). It contains pawpaw fruity essence sold by Yunnan Bagu Biotechnology Co. Ltd. under the trade name of papaya.

The silica gel cooling section and the sheet-type smoking section are rolled into a cigarette in a binary structure with an existing forming paper wrapping material.

### Example 6: A silica gel cooling section for the heat-not-burn product of the present invention

The silica gel cooling section is a tubular cooling section composed of the straight-through-hole smoke channels having the circular cross-section and channel walls surrounding the smoke channels. There are 40 total straight-through-hole smoke channels, wherein 14 are located in the middle of the silica gel cooling section, and 26 are close to the outer wall of the silica gel cooling section. The ratio of the cross-sectional area of the smoke channels to that of the non-channel is 2.0.

The methyl silicone rubber food-grade silica gel sold by Shenzhen Muwei Technology Co., Ltd. under the trade name of dimethyl silicone rubber, having a thermal decomposition temperature above 300°C, is used to prepare a prefabricated silica gel cooling section by using the extrusion high-temperature curing molding method described in the present specification, then maintaining 25.8 hours at a temperature of 22°C and a relative humidity of 72%. Using the detection method described in this specification to detect that the water content thereof reaches 1.0% by weight to obtain the silica gel cooling section. The length of the silica gel cooling section is 5 mm, its outer diameter is 4.0 mm. Detecting according to the methods described in the present specification, its Shore hardness is 70 degrees, and its specific heat capacity is 1.9 kJ/(kg·°C). It contains burley tobacco essence sold by Yunnan Henggang Technology Co. Ltd. under the trade name of mixed tobacco flavor.

The silica gel cooling section and the existing sheet-type smoking section, the acetate fiber filtering section and the paper tube empty tube section are rolled into a cigarette in a quaternion structure with a forming paper wrapping material.

According to the methods described in the SUMMARY OF THE INVENTION, the smoke temperature, the smoke concentration and the sense evaluation in Example 1-6 are detected, and the detection results and the smoking evaluation results are listed in Table 1.

**Table 1: The detection results of the silica gel cooling section for the heat-not-burn product of the present invention.**

| Sample | Smoke temperature /°C | smoke concentration /% | sense evaluation |
|---|---|---|---|
| Control 1 | 48.2 | 54.3 | Slightly high smoke temperature, average smoke volume, good smoke smell, clean aftertaste, collapse of cooling section |
| Example 1 | 42.1 | 86.5 | moderate smoke temperature, large amount of smoke, with rose smell, clean aftertaste, no deformation of silica gel section |
| Example 2 | 43.5 | 83.2 | moderate smoke temperature, large amount of smoke, obvious mint smell, comfortable oral cavity, no deformation of silica gel section |
| Example 3 | 42.4 | 88.4 | moderate smoke temperature, large amount of smoke, with passion fruit smell, having a sense of producing saliva, no deformation of silica gel section |
| Example 4 | 41.3 | 70.5 | moderate smoke temperature, large amount of smoke, rich tobacco flavor, comfortable oral cavity, no deformation of silica gel section |
| Example 5 | 41.8 | 82.4 | moderate smoke temperature, large amount of smoke, with papaya smell, having a sense of producing saliva, no deformation of silica gel section |
| Example 6 | 42.5 | 69.5 | moderate smoke temperature, large amount of smoke, rich tobacco flavor, clean aftertaste, no deformation of silica gel section |

The results in Table 1 clearly indicate that the smoke temperature of the heat-not-burn product containing the silica gel cooling section is reduced by about 4-7°C compared to the HEETs control sample, the difference of smoke concentration is at least 14.1%. As for the smoking amount, a cartridge in a binary structure rolled with the smoking section is significantly better than a cartridge in a greater than binary structure. The results of the sense evaluation indicate that collapse occurs in the cooling section of the control sample, which are not found in Example 1-6. Overall, the silica gel cooling sections in example 1-6 have lower smoke temperature and higher smoke concentration than the control sample. The heat-not-burn products having silica gel cooling section according to the present invention has the dual characteristics of low smoke temperature and high smoke concentration.

## Claims

1. A silica gel cooling section for a heat-not-burn product is **characterized in that** the silica gel cooling section is a tubular cooling section composed of a straight-through hole smoke channel having different cross sectional shapes such as circular, triangle, pentagon, quincunx or other irregular shapes and a channel wall surrounding the smoke channel; and the water content of the silica gel in the silica gel cooling section is 1.0-3.0% by weight.

2. The silica gel cooling section for a heat-not-burn product according to claim 1, **characterized in that** the silica gel cooling section is prepared by using an existing high-temperature curing molding method to prepare a prefabricated silica gel cooling section from silica gel, the prefabricated silica gel cooling section is maintained at a temperature of 18-22°C and a relative humidity of 68-72% for more than 24 hours, and the silica gel cooling section is obtained when the water content thereof reaches 1.0-3.0% by weight.

3. The silica gel cooling section for a heat-not-burn product according to claim 2, **characterized in that** the high-temperature curing molding method is extrusion molding, film pressing molding, injection molding or glue dripping molding.

4. The silica gel cooling section for a heat-not-burn product according to claim 1 or 2, **characterized in that** the silica gel of the silica gel cooling section is methyl silicone rubber, methyl vinyl silicone rubber, methyl vinyl phenyl silicone rubber, nitrile silicone rubber or fluorosilicone rubber food-grade silicone rubber material.

5. The silica gel cooling section for a heat-not-burn product according to claim 1, **characterized in that** the silica gel of the silica gel cooling section has a specific heat capacity of 1.9-3.1 kJ/(kg·°C).

6. The silica gel cooling section for a heat-not-burn product according to claim 1, **characterized in that** the thermal decomposition temperature of the silica gel of the silica gel cooling section is 300°C or more.

7. The silica gel cooling section for a heat-not-burn product according to claim 1, **characterized in that** the ratio of the cross-sectional area of the smoke channel of the silica gel cooling section to that of the non-channel is 0.3-2.0.

8. The silica gel cooling section for a heat-not-burn product according to claim 1, **characterized in that** the silica gel cooling section has a length of 5-50 mm, an outer diameter of 4.0-8.0 mm, and a Shore hardness of 20-80 degrees.

9. The silica gel cooling section for a heat-not-burn product according to claim 1, **characterized in that** the silica gel of the silica gel cooling section contains flower, mint, fruit or tobacco flavor.

10. The silica gel cooling section for a heat-not-burn product according to claim 1, **characterized in that** the silica gel cooling section and the smoking section are rolled into a cigarette in a binary structure, or the silica gel cooling section and a plurality of structural units of the heat-not-burn product are rolled into a cigarette in a greater than binary structure, with a wrapping material.
